# EUROPÄISCHE PATENTSCHRIFT

(11) **EP 2 686 140 B1**
(45) Veröffentlichungstag und Bekanntmachung des Hinweises auf die Patenterteilung: **18.02.2015**
(21) Anmeldenummer: 12718570.0
(22) Anmeldetag: 16.03.2012
(51) Int. Cl.: B25B 23/14, B23P 19/06, F16D 7/02, F16D 7/08

(54) **KRAFTSCHRAUBER-ÜBERLASTSICHERUNG**
POWER SCREWDRIVER OVERLOAD PREVENTION MEANS
SYSTÈME DE PROTECTION CONTRE LES SURCHARGES POUR CLÉ DYNAMOMÉTRIQUE

(30) Priorität: 17.03.2011 DE 102011014357
(43) Veröffentlichungstag der Anmeldung: 22.01.2014
(73) Patentinhaber: Lösomat Schraubtechnik Neef GmbH, 71665 Vaihingen/Enz (DE)
(72) Erfinder: WILCZEK, Klaus, 71339 Ehningen (DE)
(74) Vertreter: Jakelski & Althoff
(86) Internationale Anmeldenummer: PCT/DE2012/000266
(87) Internationale Veröffentlichungsnummer: WO 2012/122971

(56) Entgegenhaltungen:
- DE-C- 471 910
- DE-C2- 19 829 960
- DE-U1-202005 005 513
- US-A- 1 346 245
- US-A- 2 284 982

## Beschreibung

Die Erfindung betrifft eine Kraftschrauber-Überlastsicherung nach der Gattung des unabhängigen Anspruchs 1.

### Stand der Technik

Eine Kraftschrauber-Überlastsicherung ist beispielsweise aus der DE 10 2009 035 677.0 bekannt geworden. Diese Kraftschrauber-Überlastsicherung wird als zwischen einem Antriebsteil und einem Abtriebsteil wirkende Rutschkupplung realisiert, die beim Überschreiten eines Grenz-Drehmoments die Drehmomentübertragung zwischen dem Antriebsteil und dem Abtriebsteil unterbricht und bei der wenigstens ein separater Reibring vorgesehen ist. Diese Kraftschrauber-Überlastsicherung ist zerstörungsfrei, sodass nach einem Ansprechen der Kraftschrauber-Überlastsicherung ohne weitere Maßnahmen die Arbeit mit dem Kraftschrauber wieder aufgenommen werden kann. Der separate Reibring ermöglicht die Vorgabe einer definierten Reibung, wodurch eine reproduzierbare Wiederholbarkeit des Grenz-Drehmoments sichergestellt ist.

Eine Überlastsicherung für einen Getriebe-Kraftschlüssel geht auch aus der DE 32 37 325 C2 hervor. Bei dieser Überlastsicherung sind zwei in einem Kraftflussweg angeordnete, bei Normalbelastung mittels einer Feder in kraft- und formschlüssigem Eingriff gehaltene, bei Überlast zerstörungsfrei übereinanderrutschende stirnverzahnte Zahnräder vorgesehen. Auch diese Überlastsicherung ist zerstörungsfrei, jedoch sind die Zahnräder bei sehr hohen Drehmomenten einem erheblichen Verschleiß ausgesetzt, wodurch die Standzeit einer solchen Überlastsicherung reduziert wird.

Aus der US 5,437,524 geht eine Drehmomentbegrenzungseinrichtung hervor, bei der an bestimmten Positionen angeordnete Kugeln mit entsprechenden, in einer Scheibe angeordneten Ausnehmungen derart zusammenwirken, dass die Kugeln bei Überschreiten eines Grenzdrehmoments aus der Ausnehmung herausgedrückt werden und so die Drehmomentübertragung bei Überschreiten des Grenzdrehmoments unterbrochen wird. Bei dieser Einrichtung ist problematisch, dass die Kugeln aus entsprechenden Aufnahmen einer Scheibe herausgedrückt werden. Dies kann zu Beschädigungen der Kugelaufnahmen und damit letzten Endes zu Beschädigungen der Scheibe führen, die die Einrichtung unbrauchbar machen. Darüber hinaus muss bei dieser Einrichtung eine radiale Lagerung der Wellen vorgesehen sein, die insbesondere auch dann, wenn eine Überschreitung des Grenzdrehmoments stattfindet, eine hinreichende Lagerung der An- bzw. Abtriebswelle ermöglicht.

Aus der DE 198 29 960 C2 ist eine Drehmomentbegrenzungseinrichtung bekannt geworden, die insbesondere an manuell oder maschinell betätigten Schraubenschlüsseln oder Schraubendrehern, die um eine Drehachse drehbar sind, zum Einsatz kommt. Dabei findet die Drehmomentübertragung über Mitnehmer in Form von Kugeln statt, die übereinander abwälzen. Die Kugeln liegen dabei in Axialbohrungen übereinanderliegender Platten. Auch bei dieser Einrichtung ist eine Lagerung der beiden Wellen in Radialrichtung unbedingt erforderlich. Dies kann sich insbesondere bei der Übertragung sehr hoher Drehmomente und dort bei Überschreiten eines sehr hohen Grenzdrehmoments als problematisch erweisen.

Weitere Drehmomentbegrenzungseinrichtungen gehen aus der US 3,969,961 sowie der DE 20 2005 005 513 U1 hervor. Überlastkupplungen sind ferner aus der DE 37 38 311 A1 sowie der DE 10 2006 050 995 A1 bekannt.

Bei all diesen Einrichtungen sind jeweils präzise Lagerungen der Wellen in Radialrichtung erforderlich.

Der Erfindung liegt die Aufgabe zugrunde, eine Kraftschrauber-Überlastsicherung der gattungsgemäßen Art derart weiterzubilden, dass eine zerstörungsfreie und nahezu verschleißfreie Drehmomentunterbrechung bei Überlast selbst bei großen Drehmomenten mit exakten Werten wiederholgenau realisierbar ist. Dabei soll insbesondere auch möglich sein, eine Drehmomentübertragung unter Wegfall einer Radiallagerung wenigstens einer Welle zu realisieren.

### Offenbarung der Erfindung

### Vorteile der Erfindung

Diese Aufgabe wird durch eine Kraftschrauber-Überlastsicherung der eingangs beschriebenen Art durch die Merkmale der unabhängigen Anspruch 1. gelöst.

Grundidee einer ersten erfindungsgemäßen Lösung ist es, die Überlastsicherung durch einen drehfest in dem Abtriebsteil angeordneten Ring von Kugeln und einen diesem gegenüberliegenden, drehfest in dem Abtriebsteil angeordneten Ring von Kugeln zu realisieren, wobei die beiden Kugelringe unter einer Federvorspannung stehen und die Kugeln des Antriebsrings jeweils zwischen zwei Kugeln des Abtriebsrings liegen und so ein Drehmoment übertragen. Bei Überschreiten des Grenz-Drehmoments wälzen oder gleiten die Kugeln des Antriebsteils entgegen der Federkraft über die Kugeln des Abtriebsteils ab und unterbrechen dabei die Drehmomentübertragung.

Ein wesentliches Merkmal der erfindungsgemäßen Lösung ist dabei, dass auf eine Radiallagerung der Antriebswelle auf ihrer der Abtriebswelle abgewandten Seite verzichtet werden kann.

Der große Vorteil der beiden ineinandergreifenden Kugelringe besteht darin, dass nicht nur ein großes Drehmoment übertragen werden kann, sondern, dass eine solche Ausbildung nahezu verschleißfrei ist, da sich die Kugeln des Rings des Antriebsteils bei Überschreiten des Grenz-Drehmoments entlang der Kugeln des Rings des Abtriebsteils abwälzen oder gleiten. Es wird gleichzeitig eine axiale Ausrichtung der Wellen realisiert.

Durch die in den auf Anspruch 1 rückbezogenen Ansprüchen aufgeführten Maßnahmen sind vorteilhafte Weiterbildungen und Verbesserungen der in Anspruch 1 angegebenen Kraftschrauber-Überlastsicherung möglich.

So sieht eine vorteilhafte Ausgestaltung vor, dass das Antriebsteil eine Scheibe mit darin kreisförmig angeordneten Kugelaufnahmen aufweist, in denen die Kugeln des Antriebsteils angeordnet sind.

Ferner ist bevorzugt vorgesehen, dass auch das Abtriebsteil eine Scheibe mit darin kreisförmig angeordneten Kugelaufnahmen aufweist, in denen die Kugeln des Abtriebsteils angeordnet sind.

Dabei ist bevorzugt vorgesehen, dass die Kugelaufnahmen jeweils so tief ausgebildet sind, dass die Kugeln tiefer darin aufgenommen werden als sich gegenüberliegende Kugeln ineinander eingreifen, insbesondere jeweils wenigstens eine Halbkugel darin aufgenommen wird. Eine solche Ausbildung hat den Vorteil, dass die Kugeln sicher in den Scheiben des Antriebsteils bzw. Abtriebsteils gehalten und geführt werden. Auf diese Weise ist sichergestellt, dass auch bei Ausübung eines hohen Drehmoments keine Kugel aus ihrer Aufnahme herausbewegt werden kann. Vielmehr wird so ein sicheres Abwälzen/Gleiten der die jeweiligen Ringe bildenden Kugeln aneinander sichergestellt.

Eine besonders bevorzugte Ausführungsform sieht vor, dass einem an- oder abtriebsseitigen Ring von Kugeln ab- bzw. antriebsseitig zwei konzentrisch ineinanderliegende Ringe von Kugeln derart gegenüberliegen, dass die Kugeln des an- bzw. abtriebsseitigen Rings von Kugeln zwischen den konzentrischen Ringen angeordnet sind. Eine solche Ausbildung hat insbesondere den großen Vorteil, dass sie neben der Drehmoment-Überlastsicherung auch eine axiale Führung des Antriebsteils an dem Abtriebsteil und umgekehrt ermöglicht. Diese axiale Führung oder Ausrichtung des Antriebsteile an dem Abtriebsteil ermöglicht es sogar, auf eine antriebsseitige Radiallagerung des Antriebsteils zu verzichten. Diese wird vielmehr durch Zusammenwirkung der Kugeln realisiert, die zu einer präzisen axialen Ausrichtung des Antriebsteils an dem Abtriebsteil und umgekehrt dienen.

Die Federvorspannung kann rein prinzipiell auf unterschiedliche Art und Weise realisiert werden. Eine vorteilhafte Ausführungsform sieht vor, dass die Federvorspannung durch eine über der Scheibe des Antriebsrings angeordnete Tellerfeder hervorgerufen wird. Mit einer solchen Tellerfeder können sehr hohe Kräfte erzeugt werden.

Im Hinblick auf einen kompakten Aufbau und eine einfache Montage ist vorgesehen, dass die Kraftschrauber-Überlastsicherung ein Gehäuse aufweist, das Antriebsteil, Abtriebsteil, die sich gegenüberliegenden Kugelringe und wenigstens eine Tellerfeder so aufnimmt, dass die Scheibe mit den Kugelaufnahme des Antriebsteils unter Zwischenlage der Kugeln gegen die Scheibe mit den Kugelaufnahmen des Abtriebsteils durch die sich gegen eine Gehäusewand abstützende Tellerfeder vorgespannt ist.

Das Abtriebsteil weist bevorzugt ein Anschlusselement für eine Schraubennuss auf. Darüber hinaus kann vorgesehen sein, dass das Abtriebsteil mit einem oder mehreren Planetengetrieben gekoppelt ist, um so eine Drehmomentvervielfältigung zu ermöglichen. In diesem Falle ist dann am Ende des Planetengetriebes beispielsweise ein Abtriebselement, beispielsweise ein Zahnrad, angeordnet.

Die Kraftschrauber-Überlastsicherung ist vorteilhafterweise in einem zweiteiligen Gehäuse angeordnet. Ein solches zweiteiliges Gehäuse erleichtert nicht nur die Montage, sondern ist auch im Hinblick auf eine spätere Reparatur und Wartung von großem Vorteil, da das Gehäuse leicht geöffnet werden kann und beispielsweise einzelne Teile demontiert und ausgetauscht werden können.

Bevorzugt sind die beiden Gehäuseteile miteinander verschraubt, wobei diese Verschraubung im Falle der zweiten erfindungsgemäßen Lösung gleichzeitig für die Einstellung des Grenzdrehmoments von Bedeutung ist.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: eine isometrische Explosionsdarstellung einer erfindungsgemäßen Kraftschrauber-Überlastsicherung;
- Fig. 2: eine Schnittdarstellung der Kraftschrauber-Überlastsicherung im montierten Zustand ;
- Fig. 3: eine Schnittdarstellung einer anderen Ausführungsform der Kraftschrauber-Überlastsicherung im montierten Zustand;
- Fig. 3a: eine vergrößerte Ausschnittdarstellung der Fig. 3;
- Fig. 4: eine isometrische Explosionsdarstellung einer anderen Ausführungsform der Kraftschrauber-Überlastsicherung und
- Fig. 5: eine Schnittdarstellung der in Fig. 4 dargestellten Kraftschrauber-Überlastsicherung.

### Ausführungsbeispiele der Erfindung

Eine als Ganze mit 100 bezeichnete Kraftschrauber-Überlastsicherung umfasst ein erstes Gehäuseteil 101 und ein zweites Gehäuseteil 102, die durch Schraubverbindungen mittels Schrauben 103, die in dem ersten Gehäuseteil 101 vorgesehene Gewinde eingreifen, miteinander verbindbar sind. Zur Drehsicherung sind hierzu in verschiedenen Winkelabständen zudem Zylinderstifte 104 vorgesehen, die in entsprechende Öffnungen eingreifen.

An dem ersten Gehäuseteil 101 ist beispielsweise eine Außenverzahnung 109 drehfest angeordnet, um hier weitere Elemente, beispielsweise eine Rückdrehsicherung, auf an sich bekannte Weise anordnen zu können. Das Gehäuseteil 102 weist ein Abtriebselement 108, beispielsweise ein Zahnrad, auf. Zu bemerken ist, dass das Gehäuseteil 102 das Abtriebsteil darstellt und beispielsweise auch Teil eines Planetengetriebes sein kann, das der Übersetzung und damit der Drehmomentvervielfältigung auf an sich bekannte Weise dient.

In dem zweiten Gehäuseteil 102 wird beispielsweise eine Lageraufnahme 124 in einer zur Gehäuseachse konzentrischen Öffnung 106 angeordnet, auf die später eingegangen wird.

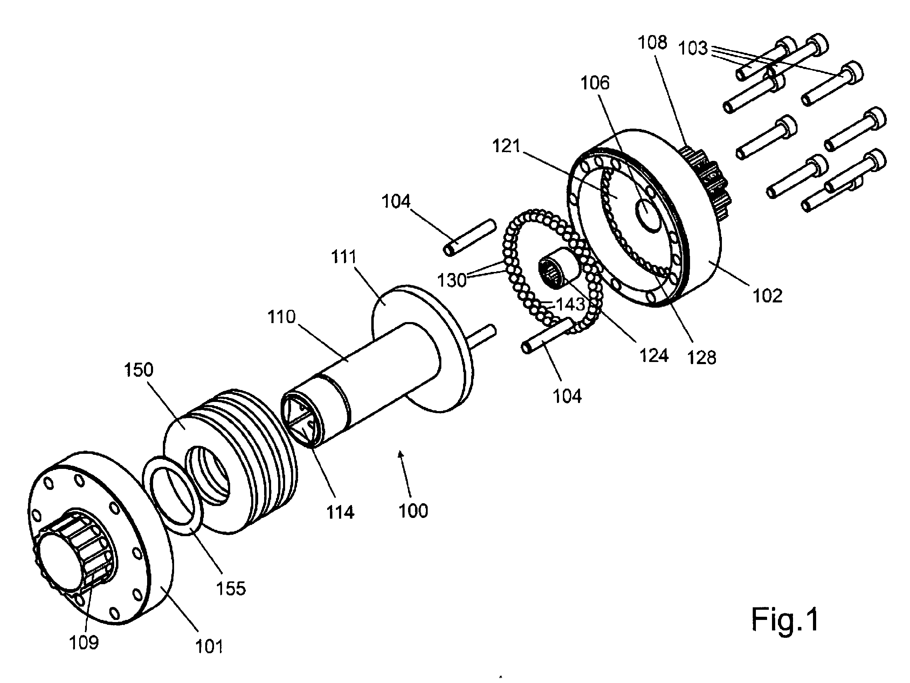

In diesem Gehäuse ist ein Antriebsteil 110 angeordnet, welches an seinem von außerhalb des Gehäuses zugänglichen Ende einen Vierkant 114 aufweist. Das Antriebsteil 110 ist im Wesentlichen zylinderförmig ausgebildet und insbesondere einstückig mit einer Scheibe 111 verbunden, in der in Fig. 1 nicht sichtbare Kugelaufnahmen für antriebsseitige Kugeln 130 vorgesehen sind. Den antriebsseitigen Kugeln 130 gegenüberliegend sind abtriebsseitige Kugeln 140 angeordnet, die ihrerseits in Kugelaufnahmen 128 in einer drehfest mit dem zweiten Gehäuseteil 102 angeordneten Scheibe 121 angeordnet sind.

Die Kugelaufnahmen 128 und die in Fig. 1 nicht sichtbaren entsprechend angeordneten Kugelaufnahmen sind dabei so tief ausgestaltet, dass die Kugeln 130, 140 wenigstens so weit in die Kugelaufnahmen hineinragen, dass jeweils mindestens eine Halbkugel darin untergebracht ist.

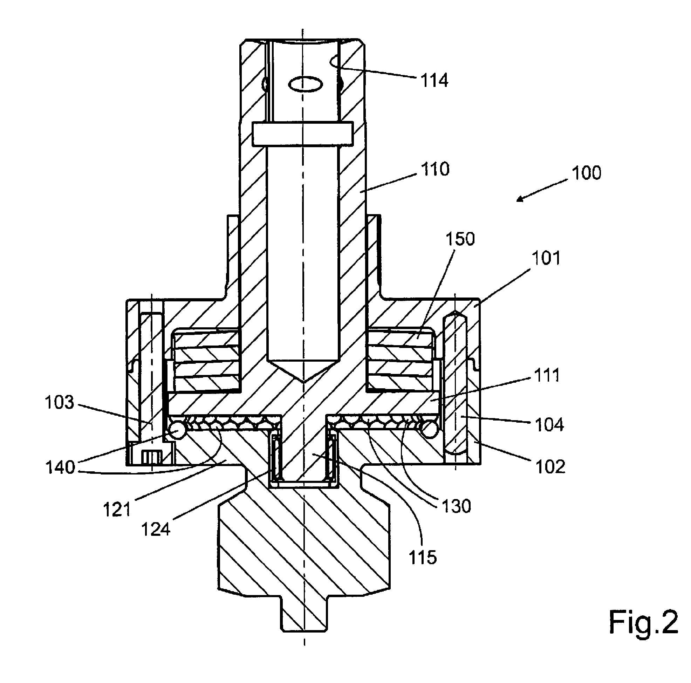

Das Antriebsteil 110 wird durch eine oder mehrere Tellerfeder(n) 150, die sich zum einen auf der Oberseite der Scheibe 111, zum anderen an dem ersten Gehäuseteil 101 unter Zwischenlage einer Passscheibe 155 abstützt, gegen das zweite Gehäuseteil, das gleichzeitig auch das Abtriebsteil 102 ist, und die Scheibe 121 unter Zwischenlage der Kugel 130, 140 gepresst. Die Passscheibe 155 kann auch durch ein (nicht dargestelltes) Axiallager ergänzt oder ersetzt werden. Dieser montierte Zustand ist in Fig. 2 in Schnittdarstellung gezeigt. Die Kugeln 130 und 140 liegen dabei so übereinander, dass die Kugeln 130 jeweils in die Zwischenräume der Kugel 140 und umgekehrt, also im Wesentlichen jeweils um einen Radius versetzt angeordnet sind. Die Kugeln 130, 140 weisen dabei den gleichen Radius auf.

Die Kugeln 130, 140 greifen unter einer Vorspannung ineinander ein, die von der Tellerfeder 150 ausgeübt wird, welche sich an einer Gehäusewand des Gehäuseteils 101 abstützt und gleichzeitig auf der Oberseite der Scheibe 111, welche die Kugelaufnahme der antriebsseitigen Kugeln 130 bildet, aufliegt. Die Tellerfeder 150 übt dabei eine sehr große Kraft auf die Kugeln 130, 140 aus.

Im normalen Schraubfall, d.h. wenn das Grenz-Drehmoment nicht überschritten ist, greifen die Kugeln 130 in die Kugeln 140 auf die vorbeschriebene Weise ein und nehmen das Abtriebsteil 102 bei einem Antrieb des Antriebsteils 110 mit. Bei Überschreiten des Grenz-Drehmoments, das insbesondere durch die Federkonstante der Tellerfeder 150 einstellbar und festlegbar ist, wälzen dagegen die Kugeln 130 des Antriebsteils über den Kugeln 140 des Abtriebsteils ab, dabei wird die Feder in Richtung des Vierkants 114 komprimiert und die Drehmomentübertragung wird dadurch unterbrochen, dass die Kugeln 130 über den Kugeln 140 ablaufen und dabei gewissermaßen von Zwischenraum zu Zwischenraum "springen".

Wie der Fig. 2 ferner zu entnehmen ist, ist in dem zweiten Gehäuseteil gleich Abtriebsteil 102 eine Lageraufnahme 124 (siehe auch Fig. 1) angeordnet, in die ein Stift 115 des Antriebsteils 110 eingreift. Diese Lagerung dient der axialen Stabilisierung des Antriebsteils 110 an dem Abtriebsteil 102.

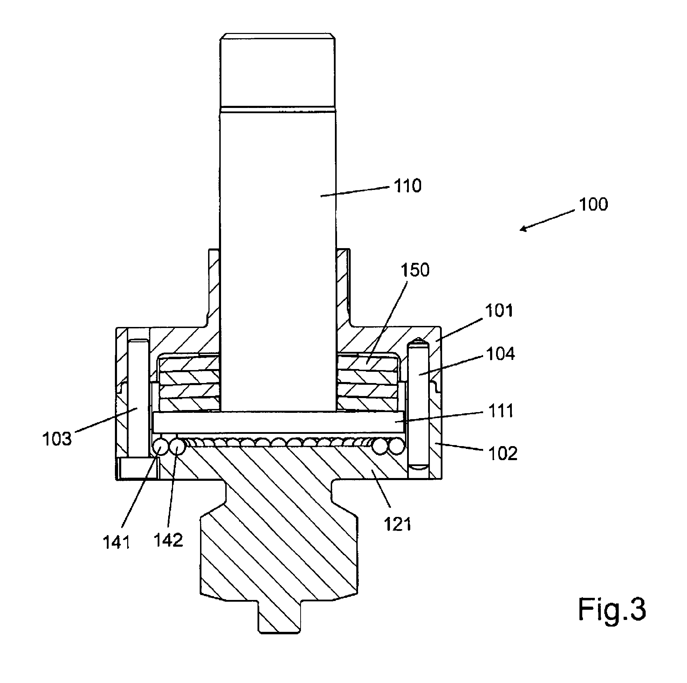

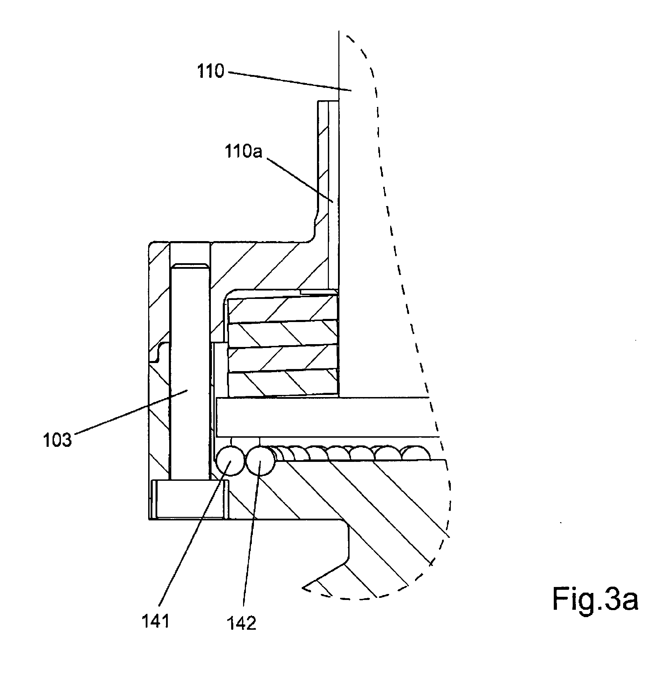

Bei einer in Fig. 3 dargestellten anderen, sehr vorteilhaften Ausführungsform ist eine solche Stabilisierung nicht erforderlich. In diesem Falle sind in dem Abtriebsteil 102, d.h. in der Scheibe 121 zwei ineinander konzentrisch angeordnete Aufnahmeringe für Kugeln 141 und 142 vorgesehen. In diese Kugeln 141,142 wiederum greifen die Kugeln 130 des Antriebsteils 110, die in Fig. 3 der Übersichtlichkeit halber weggelassen sind, ein, wobei die Kugeln 130 zwischen den beiden konzentrischen Ringen zu liegen kommen und gleichzeitig auch jeweils zwischen den Kugeln 141 des ersten Rings und den Kugeln 142 des zweiten Rings angeordnet sind. Bei Überschreiten des Grenzdrehmoments springen dabei die Kugeln 130 jeweils zwischen den benachbarten Kugeln 141 des äußeren Rings und gleichzeitig zwischen den benachbarten Kugeln 142 des inneren Rings auf die oben beschriebene Weise, wobei sie immer zwischen den konzentrischen Ringen liegen. Durch die beiden Kugelringe wird eine axiale Stabilisierung des Antriebsteils 110 an dem Abtriebsteil 102 realisiert, wobei insbesondere auch aufgrund dieser Anordnung in Verbindung mit der Federkraft eine axiale Ausrichtung des Antriebsteils 110 zum Abtriebsteil 102 in Achsrichtung realisierbar ist. In Fig. 3a ist in vergrößerter Darstellung gezeigt, dass eine antriebsseitige radiale Lagerung des Antriebsteils 110 nicht erforderlich ist. Vielmehr wird die radiale Ausrichtung des Antriebsteils 110 durch das Zusammenwirken der Kugelringe und deren Anordnung realisiert. Zwischen Antriebsteil 110 und Gehäuseteil 101 ist ein Leerraum 110a. Eine Radiallagerung des Antriebsteils 110 fällt weg. Die erfindungsgemäße Lösung kann damit - im Gegensatz zu den aus dem Stand der Technik bekannten Lösungen - auf eine antriebsseitige radiale Lagerung völlig verzichten.

Die vorbeschriebene Überlastsicherung weist den Vorteil auf, dass mit ihr nicht nur große Drehmomente übertragen werden können, sondern dass sie auch sehr verschleißarm arbeitet.

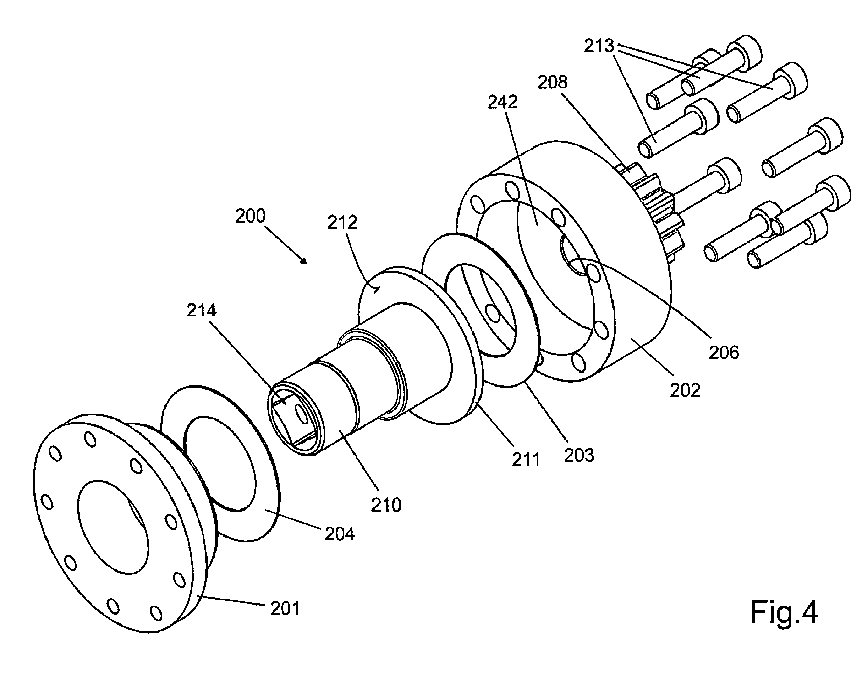

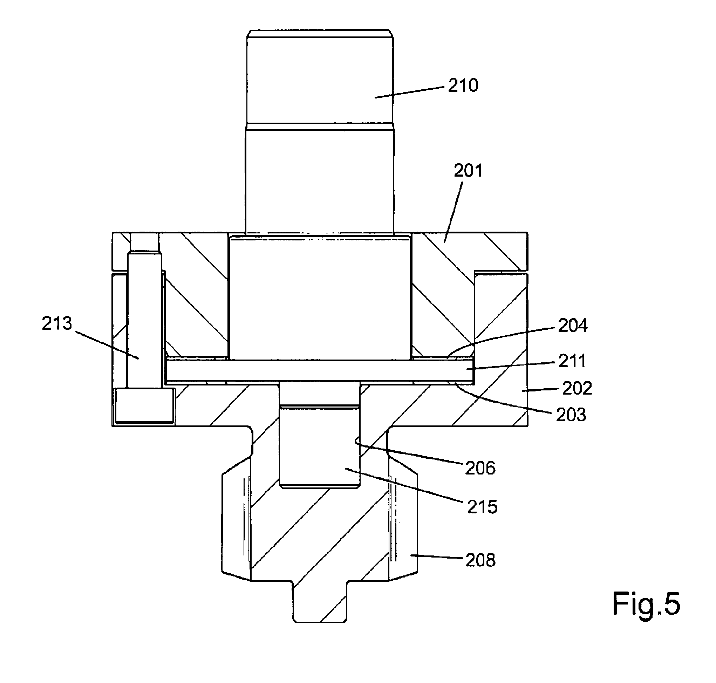

Eine andere Kraftschrauber-Überlastsicherung ist in den Figuren 4 und 5 dargestellt. Eine solche als Ganze mit 200 bezeichnete Kraftschrauber-Überlastsicherung weist in Axialrichtung folgenden Aufbau auf:

In einem Abtriebsteil 202, das beispielsweise - wie oben bereits erwähnt - gleichzeitig Teil eines Planetengetriebes sein kann, ist eine Aufnahme 242 für eine erste Gleitscheibe 203 angeordnet. Die Aufnahme weist eine ebene Fläche auf, auf der die Gleitscheibe 203 zu liegen kommt. Der Gleitscheibe 203 folgt eine erste Druckscheibe 211, die im montierten Zustand der Kraftschrauber-Überlastsicherung unter Ausübung einer Kraft auf die Gleitscheibe 203 wirkt. Diese erste Druckscheibe 211 ist vorzugsweise einstückig mit einem Antriebsteil 210 verbunden. Auf der der ersten Gleitscheibe 203 abgewandten Seite der ersten Druckscheibe 211 ist ebenfalls eine Auflagefläche 212 angeordnet, auf der eine zweite Gleitscheibe 204 aufliegt. Auf die zweite Gleitscheibe 204 drückt eine zweite Druckscheibe 201. Die zweite Druckscheibe 201 ist über Schraubverbindungen 213 mit dem Abtriebsteil 202 drehfest verbunden. Das Antriebsteil 210 ist drehbar in dieser Anordnung gelagert, wobei - wie insbesondere der Figur 5 zu entnehmen ist - hierfür ein Zapfen 215 des Antriebsteils 210 in eine Öffnung 206 in dem Abtriebsteil 202 eingreift. Hier können auch Drehlager vorgesehen sein. Diese Anordnung dient der radialen Führung des Antriebsteils 210.

Das Antriebsteil 210 weist einen Vierkant 214 auf, in den beispielsweise ein Drehmomentschlüssel oder ein Kraftschrauber oder dergleichen eingreift. An dem Abtriebsteil 202 ist ein Abtriebselement 208, beispielsweise ein Zahnrad, angeordnet. Die zweite Druckscheibe 201 und das Abtriebsteil 202 bilden gleichzeitig auch zwei Gehäusehälften des Gehäuses der Kraftschrauber-Überlastsicherung 200.

Die Funktion dieser Kraftschrauber-Überlastsicherung 200 ist folgende. Bis zu einem gewissen Grenz-Drehmoment, welches durch die Eigenschaften, insbesondere die Abmessungen (Durchmesser), der Gleitscheiben 203, 204, der Druckscheiben 211, 201, der Materialien der Gleitscheiben 203, 204 und der Druckscheiben 211, 201 sowie des Anzugsmoments der Schrauben 213 voreinstellbar ist, wird das Abtriebsteil 202 und mit ihm das Abtriebselement 208 bei einer Drehung des Antriebsteils 210 in eine Drehbewegung versetzt, wobei - wie oben bereits erwähnt - das Abtriebsteil 202 Teil eines Planetengetriebes sein kann. Sobald das Grenzdrehmoment überschritten ist, tritt eine Gleitbewegung des Antriebsteils 210 relativ zu dem Abtriebsteil 202 auf, das heißt, das Antriebsteil 210 "dreht durch", wobei dies mit einer erheblichen Geräuschentwicklung verbunden ist. Die Gleitbewegung des Antriebsteils 210 relativ zu dem Abtriebsteil 202 geschieht dabei auf folgende Weise: bei Überschreiten des Grenzdrehmoments können mehrere Varianten des Gleitens der verschiedenen Bauteile aneinander auftreten. Es kann jeweils eine Gleitbewegung zwischen der ersten Gleitscheibe 203 und dem Abtriebselement 202 oder zwischen der ersten Gleitscheibe 203 und der ersten Druckscheibe 211 oder zwischen der ersten Druckscheibe 211 und er zweiten Gleitscheibe 204 oder zwischen der zweiten Gleitscheibe 204 und der zweiten Druckscheibe 201 stattfinden. Das heißt mit anderen Worten, die Gleitscheiben können in Axialrichtung gesehen auf ihren beiden Seiten gleiten und damit die Drehmomentübertragung unterbrechen.

Die Anordnung weist den Vorteil auf, dass im Falle eines Verschleißes der Gleitscheiben 203, 204 diese leicht austauschbar sind. Darüber hinaus unterliegen Gleitscheiben 203, 204 einem wesentlich geringerem Verschleiß, als beispielsweise stirnverzahnte Zahnräder, wie sie aus dem Stand der Technik bekannt sind.

## Patentansprüche

1. Kraftschrauber-Überlastsicherung (100), die zwischen einem Antriebsteil (110) und einem Abtriebsteil (102, 121) angeordnet ist und die beim Überschreiten eines Grenz-Drehmoments die Drehmomentübertragung zwischen dem Antriebsteil (110) und dem Abtriebsteil (102 121) unterbricht, wobei das Antriebsteil (110) wenigstens einen drehfest in dem Antriebsteil angeordneten Ring von Kugeln (130) aufweist, das Abtriebsteil (102, 121) wenigstens einen drehfest in dem Abtriebsteil (102, 121) angeordneten Ring von Kugeln (140; 141, 142) aufweist und der in dem Antriebsteil (110) angeordnete Ring von Kugeln (130) federvorgespannt so über dem in dem Abtriebsteil (102, 121) angeordneten Ring von Kugeln (140; 141, 142) liegt, dass die Kugeln (130) des Antriebsteils (110) jeweils zwischen zwei Kugeln (140; 141, 142) des Abtriebsteils (102, 121) liegen und so ein Drehmoment übertragen und wobei sich die Kugeln (130) des Antriebsteils (110) bei Überschreiten des Grenzdrehmoments über die Kugeln (140; 141, 142) des Abtriebsteils (102, 121) abwälzen und dabei die Drehmomentübertragung unterbrechen, **dadurch gekennzeichnet, dass** die Kugeln des an- oder abtriebseitigen Rings (130) von Kugeln zwischen den konzentrischen Ringen (141, 142) liegen, unter Wegfall einer Radiallagerung eine axiale Ausrichtung des Antriebsteils an dem Abtriebsteil realisierbar ist.

2. Kraftschrauber-Überlastsicherung (100) nach Anspruch 1, **dadurch gekennzeichnet, dass** das Antriebsteil (110) eine Scheibe (111) mit darin kreisförmig angeordneten Kugelaufnahmen aufweist, in denen die Kugeln (130) des Antriebsteils (110) angeordnet sind.

3. Kraftschrauber-Überlastsicherung (100) nach Anspruch 1, **dadurch gekennzeichnet, dass** das Abtriebsteil (102, 121) eine Scheibe (121) mit darin kreisförmig angeordneten Kugelaufnahmen (128) aufweist, in denen die Kugeln (140; 141, 142) des Abtriebsteils (102, 121) angeordnet sind.

4. Kraftschrauber-Überlastsicherung (100) nach Anspruch 2 oder 3, **dadurch gekennzeichnet, dass** die Kugelaufnahmen (128) so tief ausgebildet sind, dass jeweils wenigstens eine Halbkugel darin aufgenommen wird.

5. Kraftschrauber-Überlastsicherung (100) nach einem der vorstehenden Ansprüche, **dadurch gekennzeichnet, dass** einem an- oder abtriebsseitigen Ring von Kugeln (130) ab- bzw. antriebsseitig zwei konzentrisch ineinanderliegende Ringe von Kugeln (141, 142) gegenüberliegen derart, dass die Kugeln des an- oder abtriebsseitigen Rings (130) von Kugeln zwischen den konzentrischen Ringen (141, 142) liegen.

6. Kraftschrauber-Überlastsicherung (100) nach Anspruch 1, **dadurch gekennzeichnet, dass** die Federvorspannung durch wenigstens eine über der Scheibe (111) des Antriebsrings (110) angeordnete Tellerfeder (150) hervorgerufen wird.

7. Kraftschrauber-Überlastsicherung (100) nach einem der vorstehenden Ansprüche, **dadurch gekennzeichnet, dass** in einem Gehäuse das Antriebsteil (110), das Abtriebsteil (102, 121), die sich gegenüberliegenden Kugelringe und eine Tellerfeder so angeordnet sind, dass die Scheibe (111) mit den Kugelaufnahmen des Antriebsteils (110) unter Zwischenlage der Kugeln (130; 140; 141, 142) gegen die Scheibe (121) mit den Kugelaufnahmen (128) des Abtriebsteils (102, 121) durch die sich gegen eine Gehäusewand abstützende Tellerfeder vorgespannt ist.

8. Kraftschrauber-Überlastsicherung (100; 200) nach Anspruch 1, **dadurch gekennzeichnet, dass** das Antriebsteil (110; 210) eine Aufnahme, insbesondere einen Vierkant (114; 214)) für einen Kraftschrauber oder einen Drehmomentschlüssel, aufweist.

9. Kraftschrauber-Überlastsicherung (100; 200) nach Anspruch 1, **dadurch gekennzeichnet, dass** das Abtriebsteil (102, 121; 202) ein Anschlusselement (108; 208) aufweist.

10. Kraftschrauber-Überlastsicherung (100; 200) nach einem der vorstehenden Ansprüche, **dadurch gekennzeichnet, dass** sie in einem zweiteiligen Gehäuse angeordnet ist.

11. Kraftschrauber-Überlastsicherung (100; 200) nach Anspruch 10, **dadurch gekennzeichnet, dass** die beiden Gehäuseteile (101, 102; 201, 202) miteinander verschraubt sind.

## Claims

1. Power screwdriver overload protection (100) which is arranged between a drive part (110) and a driven part (102, 121), and which interrupts the torque transmission between the drive part (110) and the driven part (102, 121) when a torque limit is exceeded, wherein the drive part (110) comprises at least one ring of balls (130) that is arranged in a torque-proof manner inside the drive part, the driven part (102, 121) has at least one ring of balls (140; 141, 142) that is arranged in a torque-proof manner inside the driven part (102, 121), and the ring of balls (130) that is arranged inside the drive part (110) is positioned in a spring-tensioned manner above the ring of balls (140; 141, 142) arranged in the driven part (102, 121) in such a way that the balls (130) of the drive part (110) are respectively positioned between two balls (140; 141, 142) of the driven part (102, 121) and therefore transfer a torque, and wherein the balls (130) of the drive part (110) roll off over the balls (140; 141, 142) of the driven part (102, 121) when the torque limit is exceeded, and in doing so interrupt the torque transmission, **characterized in that** the balls of the ring (130) of balls that is located on the side of the drive part or on the side of the driven part are located between the concentric rings (141, 142), [and] an axial orientation of the drive part with regard to the driven part can be realized while the radial bearing may be dispensed with.

2. Power screwdriver overload protection (100) according to claim 1, **characterized in that** the drive part (110) comprises a disc (111) that has circularly arranged ball seatings disposed therein, inside which the balls (130) of the drive part (110) are arranged.

3. Power screwdriver overload protection (100) according to claim 1, **characterized in that** the driven part (102, 121) comprises a disc (121) that has circularly arranged ball seatings (128) disposed therein, inside which the balls (140; 141, 142) of the driven part (102, 121) are arranged.

4. Power screwdriver overload protection (100) according to claim 2 or 3, **characterized in that** the ball seatings (128) are designed so that they have a depth which allows them to receive at least one hemisphere of the ball, respectively.

5. Power screwdriver overload protection (100) according to any of the preceding claims, **characterized in that** two rings of balls (141, 142) that are located on the side of the drive part or on the side of the driven part and that are concentrically arranged inside each other are positioned opposite the ring of balls (130) that is located on the side of the drive part or on the side of the driven part, namely in such a manner that the balls of the ring (130) of balls which is located on the side of the drive part or on the side of the driven part lie between the concentric rings (141, 142).

6. Power screwdriver overload protection (100) according to claim 1, **characterized in that** the spring preload is created by at least one plate spring (150) which is arranged above the disc (111) of the drive ring (110).

7. Power screwdriver overload protection (100) according to any of the preceding claims, **characterized in that** the drive part (110), the driven part (102, 121), the facing ball rings and the plate spring are arranged inside a housing in such a manner that the disc (111) with the ball seatings of the drive part (110) is preloaded by the plate spring which is supported against a housing wall with interposition of the balls (130; 140; 141, 142) against the disc (121) with the ball seatings (128) of the drive part (102, 121).

8. Power screwdriver overload protection (100; 200) according to claim 1, **characterized in that** the drive part (110; 210) has a seating, particularly a square (114; 214) for a power screwdriver or a torque wrench.

9. Power screwdriver overload protection (100; 200) according to claim 1, **characterized in that** the driven part (102, 121; 202) comprises a connecting element (108; 208) .

10. Power screwdriver overload protection (100; 200) according to any of the preceding claims, **characterized in that** it is arranged inside a two-part housing.

11. Power screwdriver overload protection (100; 200) according to claim 10, **characterized in that** the two housing parts (101, 102; 201, 202) are screwed together.

## Revendications

1. Dispositif de protection contre les surcharges pour clé dynamométrique (100) qui est monté entre une partie d'entrainement (110) et une partie entrainée (102, 121) et qui interrompt en cas de dépassement d'un couple de rotation limite la transmission du couple entre la partie d'entrainement (110) et la partie entrainée (102, 121), dans lequel la partie d'entrainement (110) comporte au moins une couronne de billes (130) montée solidairement en rotation dans cette partie d'entrainement, la partie entrainée (102, 121) comporte au moins une couronne de billes (140, 141, 142) montée solidairement en rotation dans cette partie entrainée (102, 121), et la couronne de billes (130) montée dans la partie d'entrainement (110) s'applique sur la couronne de billes (140, 141, 142) montée dans la partie entrainée (102, 121) en étant élastiquement précontrainte de sorte que les billes (130) de la partie d'entrainement (110) soient respectivement situées entre deux billes (140, 141, 142) de la partie entrainée, et transmettent ainsi un couple de rotation, et en cas de dépassement du couple de rotation limite les billes (130) de la partie d'entrainement (110) roulant sur les billes (140, 141, 142) de la partie entrainée (102, 121) et interrompent ainsi la transmission du couple de rotation,
**caractérisé en ce que**
les billes de la couronne de billes (130) située côté entrainement ou côté entrainé s'appliquent entre les couronnes concentriques (141, 142) et en cas de suppression d'un appui radial, une orientation de la partie d'entrainement sur la partie entrainée peut être obtenue.

2. Dispositif de protection contre les surcharges pour clé dynamométrique (100) conforme à la revendication 1,
**caractérisé en ce que**
la partie d'entrainement (110) comprend un disque (111) muni de logements de billes disposés sur un cercle dans lesquels sont logées les billes (130) de la partie d'entrainement (110).

3. Dispositif de protection contre les surcharges pour clé dynamométrique (100) conforme à la revendication 1,
**caractérisé en ce que**
la partie entrainée (102, 121) comporte un disque (121) muni de logements de billes (128) disposés sur un cercle dans lesquels sont logées les billes (140, 141, 142) de la partie entrainée (102, 121).

4. Dispositif de protection contre les surcharges pour clé dynamométrique (100) conforme à la revendication 2 ou 3,
**caractérisé en ce que**
les logements de billes (128) ont une profondeur telle qu'ils reçoivent respectivement au moins la moitié d'une bille.

5. Dispositif de protection contre les surcharges pour clé dynamométrique (100) conforme à l'une des revendications précédentes,
**caractérisé en ce qu'**
en regard d'une couronne de billes (130) située côté entrainement ou côté entrainé, sont positionnées, côté entrainé ou côté entrainement, deux couronnes de billes (141, 142) emboîtées concentriquement l'une dans l'autre de sorte que les billes de la couronne de billes (130) située côté entrainement ou côté entrainé s'appuient entre les couronnes concentriques (141, 142).

6. Dispositif de protection contre les surcharges pour clé dynamométrique (100) conforme à la revendication 1,
**caractérisé en ce que**
la précontrainte élastique est exercée par au moins un ressort Belleville (110) monté sur le disque (111) de la couronne d'entrainement (150).

7. Dispositif de protection contre les surcharges pour clé dynamométrique (100) conforme à l'une des revendications précédentes,
**caractérisé en ce que**
la partie d'entrainement (110), la partie entrainée (102, 121), les couronnes de billes situées en regard et un ressort Belleville sont montés dans un boitier de sorte que le disque (111) muni des logements de billes de la partie d'entrainement (110) soient précontraint, avec interposition des billes (130, 140, 141, 142) contre le disque (121) muni des logements de billes (128) de la partie entrainée (102, 121) par le ressort Belleville s'appuyant contre une paroi du boitier.

8. Dispositif de protection contre les surcharges pour clé dynamométrique (100, 200) conforme à la revendication 1,
**caractérisé en ce que**
la partie d'entrainement (110, 210) comporte un logement, en particulier un quatre pans (114, 214) pour une clé dynamométrique.

9. Dispositif de protection contre les surcharges pour clé dynamométrique (100, 200) conforme à la revendication 1,
**caractérisé en ce que**
la partie entrainée (102, 121, 202) comporte un élément de connexion (108, 208).

10. Dispositif de protection contre les surcharges pour clé dynamométrique (100, 200) conforme à l'une des revendications précédentes,
**caractérisé en ce qu'**
il est monté dans un boitier en deux parties.

11. Dispositif de protection contre les surcharges pour clé dynamométrique (100, 200) conforme à la revendication 10,
**caractérisé en ce que**
les deux parties de boitier (101, 102, 201, 202) sont vissées l'une sur l'autre.
